# EUROPEAN PATENT SPECIFICATION

(11) **EP 3 040 064 B1**
(45) Date of publication and mention of the grant of the patent: **19.08.2020**
(21) Application number: 15836863.9
(22) Date of filing: 26.06.2015
(51) Int. Cl.: A61H 3/00, B25J 11/00, A61H 1/02

(54) **JOINT MOVEMENT ASSISTANCE DEVICE**
HILFSVORRICHTUNG FÜR GELENKBEWEGUNG
DISPOSITIF D'ASSISTANCE AU MOUVEMENT D'ARTICULATION

(30) Priority: 28.08.2014 JP 2014174270
(43) Date of publication of application: 06.07.2016
(73) Proprietor: Kyushu University National University Corporation, Fukuoka 812-8581 (JP); Sumitomo Riko Company Limited, Komaki-shi, Aichi 485-8550 (JP)
(72) Inventor: YAMAMOTO, Motoji, Fukuoka-shi Fukuoka 812-8581 (JP); TAKASUGI, Shin-ichiro, Fukuoka-shi Fukuoka 812-8581 (JP); JIN, Shanhai, Fukuoka-shi Fukuoka 812-8581 (JP); YOSHIMINE, Hiroshi, Fukuoka-shi Fukuoka 812-8581 (JP); KOMATSU, Takahiro, Komaki-shi Aichi 485-8550 (JP); HASHIMOTO, Kazunobu, Komaki-shi Aichi 485-8550 (JP); SATO, Shohei, Komaki-shi Aichi 485-8550 (JP)
(74) Representative: Müller-Boré & Partner Patentanwälte PartG mbB
(86) International application number: PCT/JP2015/068532
(87) International publication number: WO 2016/031376

(56) References cited:
- EP-A1- 2 832 338
- WO-A1-2013/145769
- WO-A1-2014/109799
- JP-A- 2010 075 658
- JP-A- 2010 110 464
- JP-B2- 4 200 492
- JP-B2- 4 345 025

## Description

### TECHNICAL FIELD

The present invention relates to a joint-movement assisting device that, during a periodic repeated movement of a joint like a walking of a user, is able to support muscular strength of the user without excessively restricting the movement of the user who is wearing it.

### BACKGROUND ART

Conventionally, for example as stated in Japanese Patent No. JP-B-4200492 (Patent Document 1) and Japanese Unexamined Patent Publication No. JP-A-2010-110464 (Patent Document 2) and the like, a wearable assisting device is proposed in order to support walking, etc., of a physically disabled person who has lost muscular strength or an elderly person whose muscular strength has weakened. The assisting device of a conventional structure that was indicated in these Patent Documents 1 and 2 is an external skeleton type assisting device, wherein the external skeleton, which is composed of a rigid arm and frame that is worn to fit the user's body, is driven at the joints by motors in order to move the user's legs in combination with the external skeleton's arms.

However, in that type of assisting device that employs a rigid external skeleton,- if the device did not fit- the- user's physique correctly or- it- was not worn properly, there was a risk of excessive force or unreasonable force being applied to the user's joint, etc., during movement. Additionally, since the rigid external skeleton restricts the movement of the user's joints, there was also the possibility that the fall-preventing action of the user's autonomous reaction will be hindered, thereby leading to a fall in the case where, for example, there is a disturbance on the user, such as an external force in the transverse direction.

Accordingly, in Japanese Unexamined Patent Publication No. JP-A-2013-208397 (Patent Document 3), the Applicant previously proposed a walking movement aid that supports the movement without excessively hindering the user's autonomous movement by the muscular strength. This movement aid includes a flexible assist force transmission part, and with its opposite ends worn on the opposite sites sandwiching a joint of the user, the aid is able to exert an assist force on the assist force transmission part in the direction of tension with a prescribed timing according to the joint angle of the user. Therefore, this movement aid makes it possible to perform muscle strength assistance such as lifting the swinging leg and swinging out it forward during walking, for example.

However, further research conducted by the inventors has revealed the following. Specifically, with the movement aid described in Patent Document 3 utilizing the flexible assist force transmission part, the assist force transmission part that transmits the assist force will be subjected to slack, bend, extension or the like. Thus, in comparison with the assisting device disclosed in Patent Documents 1 and 2 mentioned previously that utilizes the rigid external skeleton and directly exerts the assist force on the user, it is difficult to exert the assist force that corresponds to the joint movement of the user with high accuracy and stability.

### BACKGROUND ART DOCUMENTS

### PATENT DOCUMENTS

Patent Document 1: JP-B-4200492
Patent Document 2: JP-A-2010-110464
Patent Document 3: JP-A-2013-208397
   WO 2014/109799 A1 discloses a device according to the preamble of claim 1. It discloses a system for generating force about one or more joints which includes a soft exosuit having a plurality of anchor elements and at least one connection element disposed between the plurality of anchor elements.

### SUMMARY OF THE INVENTION

### PROBLEM THE INVENTION ATTEMPTS TO SOLVE

It is therefore one object of this invention to provide a joint-movement assisting device of novel structure which, during exerting a support force on the joint movement of the user by utilizing a flexible assist force transmission part, is able to exert an assist force that corresponds to the joint movement of the user with high accuracy and stability.

### MEANS FOR SOLVING THE PROBLEM

According to the present invention, a joint-movement assisting device according to claim 1 is provided.

With the joint-movement assisting device constructed according to the first mode, since the assist force transmission part is flexible and allowed to deform, the movement of the user will not be excessively restricted, unlike the movement aid having a rigid external skeleton. Therefore, a muscular strength training effect is demonstrated much more effectively through the user's autonomous movement and, for example, even if the user experiences a disturbance, such as an external force in the different direction from the direction of action of the assist force, the user's autonomous movement is allowed thereby improving wearing feeling.

Moreover, with the joint-movement assisting device of the present mode, the assist force exerted from the assist force transmission part on the bent portion of the user's joint is directly detected by the load sensor. Since the driving means is feedback-controlled based on the detection value detected by the load sensor, control errors of the assist force due to slack, bend, extension or the like in the flexible assist force transmission part will be effectively avoided, making it possible to exert the desired assist force on the joint site of the user with excellent accuracy and stability.

Particularly in the present mode, it is desirable to perform the feedback control of the driving means based on the detection value detected by the load sensor in both states, namely (i) during action of the assist force and (ii) during non-action of the assist force. However, even by performing the feedback control in either one of those states only, the desired improvement in accuracy and stability of the assist force can be achieved.

Specifically, with the flexible assist force transmission part, which is not a rigid external skeleton, there are backgrounds that due to slack or the like, the state can be correctly detected only under the specific condition with the load sensor, or the like. Therefore, with the aforementioned movement aid including the flexible assist force transmission part described as an embodiment in Patent Document 3, which is the previous application by the Applicant, based on a joint angle detected by a joint bend angle sensor, the assist force exerted by an electric motor on the assist force transmission part is configured to be controlled in a feedforward way.

Here, in the present mode, the load sensor which is unable to detect slack or the like is purposely employed in combination with the flexible assist force transmission part. Besides, the present mode utilizes the detection value detected in the assist force transmission part by the load sensor under the specific condition as a reference signal in combination with the specific feedback control during action of the assist force and during non-action of the assist force.

As a result, (i) by employing the detection value detected by the load sensor for the feedback control during action of the assist force, it is possible to control the assist force exerted on the bent portion of the user's joint directly with high accuracy, and (ii) by employing the detection value detected by the load sensor for the feedback control during non-action of the assist force, it is possible to eliminate the slack of the assist force transmission part with high accuracy, thereby preventing operating errors caused by the time at the start of assist force action or the time lag of the assist force.

A second mode of the present invention provides the joint-movement assisting device according to the first mode wherein the assist force transmission part includes an elastically deformable elastic part in at least a portion thereof in a lengthwise direction.

With the joint-movement assisting device of the present mode, the tensile driving force exerted by the driving means will be ameliorated between the first wearing part and the second wearing part by the elasticity of the assist force transmission part. This will reduce an abrupt load or an excessive load exerted sharply on the user's joint or the like, thereby achieving more safety of the user.

A third mode of the present invention provides the joint-movement assisting device according to the first or second mode wherein an encoder is provided to the driving means to detect an amount of traction of the assist force transmission part in the direction of tension, and a traction-amount control means is provided to do operation control of the driving means based on a detection value detected by the encoder in order to lead the amount of traction of the assist force transmission part to an intended value.

The joint-movement assisting device of the present mode makes it possible to control the amount of traction of the assist force transmission part based on the detection value detected by the encoder. Accordingly, by appropriately combining with the feedback control of the assist force by means of the load sensor, the control modes will be liberalized. For example, by means of assist timing control means, the driving means is operated with high speed from its operation start until the traction reaches the prescribed amount. In this way, it is possible to enhance the speed of start-up of the assist force with better response than in the feedback control by means of the load sensor, and then, it is also possible to handle the assist force through the feedback control by means of the load sensor with high accuracy or the like. In addition, when handling the assist force through the feedback control by means of the load sensor, by concomitantly setting the maximum value for the amount of traction of the assist force transmission part based on the detection value detected by the encoder, an excessive action of the assist force due to overshoots can be prevented. Also, by setting the allowable range for the amount of traction, the feedback control can be prevented from lapsing into an unstable state such as divergence before it happens, or the like.

A fourth mode of the present invention provides the joint-movement assisting device according to any of the first through third modes wherein the target value of the assist force of the assist force control means is given as a periodic waveform that corresponds to a periodic bending movement of the joint.

The joint-movement assisting device according to the present mode is able to readily and more stably exert the assist force that can efficiently act on the periodic bending movement of the joint. Such periodic bending movement of the joint may be a muscular strength training exercise that periodically repeats a bend of the specific joint such as an elbow or the like. Besides, a walking movement that periodically bends the left and right hip joints in an alternate fashion is also included in such periodic bending movement.

When applying the present mode to the assisting device for such walking movement, the device includes, as a pair of assisting units for the left and right legs, a left/right pair of assist force transmission parts each having a first wearing part worn on the thigh side of the hip joint and a second wearing part worn on the waist side of the hip joint provided at its respective ends, and further includes a driving means and a control means that exert assist forces on both the left/right assist force transmission parts. Then, for example, for the swinging leg that is swung forward from the backward in the walking direction, the assist force is configured to be alternately exerted on each of the left and right legs with the timing and in the direction that assist the muscular strength for lifting the thigh of the swinging leg and swinging it forward.

Note that for the assisting device for such walking movement, with regard to the joint angle sensor, it may be accepted to employ a sensor that detects the relative opening/closing angle of the left and right femurs of the user in the front-back direction. However, it is preferable to employ a sensor that detects the incline angle of the femur in relation to the hip bone in the front-back direction individually for the left and right legs. By so doing, for each left and right leg, it is possible to exert support force according to the angle of the hip joint, and therefore, when walking has started, for example, it is also possible to exert the support force on the kicking off leg more rapidly. Besides, in the cases where a large support force suddenly becomes necessary for only one leg due to a disturbance or the like, it is possible to readily perform a quick response on the one leg such as releasing the support force.

Here, a fifth mode of the present invention provides the joint-movement assisting device according to any of the first through fourth modes wherein the joint angle sensor detects an angle of a hip joint of the user, the at least one assist force transmission part comprises a pair of assist force transmission parts provided for left and right legs, and the assist force is configured to be exerted on each of the left and right legs for a walking movement of the user.

### EFFECT OF THE INVENTION

According to the present invention, a rigid external skeleton becomes unnecessary, and the simple structure makes manufacturing easy. It is also possible to provide a movement assisting device with a novel structure that supports user's muscular strength during movement such as walking without excessively restricting the movement of the user, to allow the user's autonomous fall-preventing movement, etc., when, for example, there is a disturbance or the like, and safely and effectively demonstrate a training effect for muscular strength.

Moreover, in the present invention, the load sensor which is unable to detect slack or the like is purposely employed in combination with the flexible assist force transmission part. Besides, the present invention performs a feedback control during action of the assist force and during non-action of the assist force with individual modes based on the detection value detected by the load sensor. This makes it possible to exert the assist force on the user with high accuracy and stability by using the flexible assist force transmission part.

### BRIEF DESCRIPTION OF THE DRAWINGS

FIG. 1 is a front view showing a joint-movement assisting device according to a first embodiment of the present invention.
FIG. 2 is a rear view of the joint-movement assisting device shown in FIG. 1.
FIG. 3 is a side view of the joint-movement assisting device shown in FIG. 1.
FIG. 4 is a view showing an internal structure of a drive device, in the rear view of the joint-movement assisting device shown in FIG. 2.
FIG. 5 is a block diagram schematically showing a hardware configuration of the joint-movement assisting device shown in FIG. 1.
FIG. 6 is a view suitable for diagrammatically explaining action of an assist force for walking movement with the joint-movement assisting device of the present embodiment.
FIG. 7 is a graph suitable for explaining an action pattern of the assist force exerted by an assist force transmission band of the joint-movement assisting device of the present embodiment.
FIG. 8 is a view suitable for explaining changes in an effective free length of the assist force transmission band accompanying walking movement for the joint-movement assisting device of the present embodiment.
FIG. 9 is a control flow chart suitable for explaining one mode of operation control for the joint-movement assisting device of the present embodiment.
FIGS. 10A and 10B are graphs where FIG. 10A shows actual measurements of the assist force exhibited by the operation control of Example shown in FIG. 9, together with FIG. 10B showing those of Comparative Example.
FIGS. 11A and 11B are a graph and a chart showing test results for confirming an effect of muscular strength support (assistance) by the joint-movement assisting device shown in FIG. 1.
FIGS. 12A-12C are views showing a joint-movement assisting device according to a second embodiment of the present invention, where FIG. 12A is a front view, FIG. 12B is a rear view, and FIG. 12C is a side view.
FIGS. 13A-13C are views showing a joint-movement assisting device according to another embodiment of the present invention, where FIG. 13A is a front view, FIG. 13B is a rear view, and FIG. 13C is a side view.

### EMBODIMENTS FOR CARRYING OUT THE INVENTION

Embodiments of the present invention will be described below in reference to the drawings.

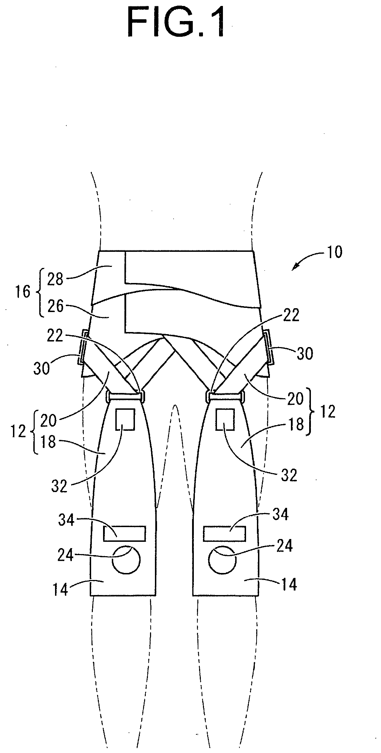

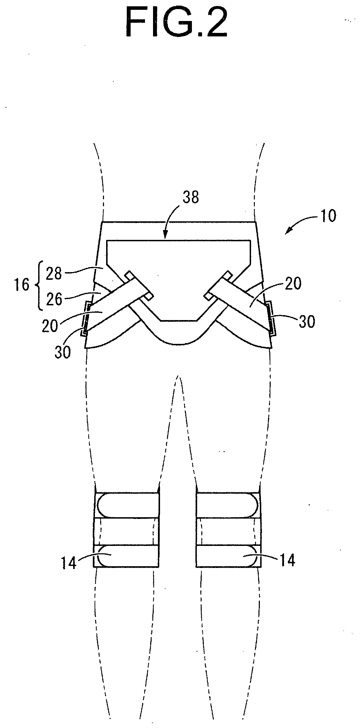

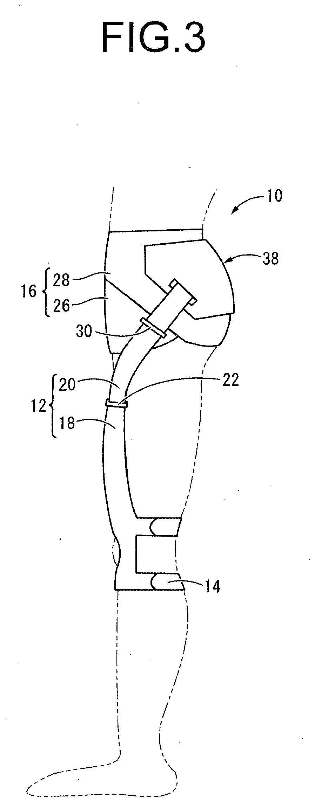

Referring first to FIGS. 1 through 3, there is depicted a walking movement assisting device 10 as a first embodiment of the joint-movement assisting device constructed according to the present invention. The walking movement assisting device 10 assists bending and stretching of the hip joints and has a structure including a left/right pair of assist force transmission bands 12, 12 serving as assist force transmission parts that extend across the hip joints, and first wearing parts 14 and a second wearing part 16 attached to the first end and the second end, respectively, of the assist force transmission bands 12, 12. Each of the first wearing parts 14 is attached on the thigh side, namely the first site of the user's hip joint where the femur is located, while the second wearing part 16 is attached on the waist side, namely the second site of the user's hip joint where the hip bone is located. Accordingly, the left/right pair of assist force transmission band 12, 12, the first wearing parts 14, 14, the second wearing part 16 and a pair of electric motors 17, 17 serving as a driving means constitute a left/right pair of assisting units. FIGS. 1 through 3 illustrate the walking movement assisting device 10 as when it is worn by the user, and the user's outline is indicated with a chain double-dashed line. Furthermore, in the following explanation, as a general rule, "front surface" refers to the surface on the user's abdomen side (front side), "back surface" refers to the surface on the user's back side (rear side), and "up-down" refers to the vertical direction, which is up and down in FIG. 1. Also, in the following explanation, "assist force" refers to the assist force that acts in the direction assisting the strength force required for movements such as walking.

Described more specifically, the assist force transmission band 12 has a structure wherein a first traction band 18 and a second traction band 20, each formed of a flexible band-shaped body, are connected by a metal connecting fitting 22. The portions composed of these first traction band 18 and the second traction band 20 are both flexibly deformable.

The first traction band 18 is formed of an substantially band-shaped fabric, etc., that extends up-down, and is arranged so as to cover the front surface of the user's thigh when the walking movement assisting device 10 is being worn. The material of the first traction band 18 is preferably made of a deformable, soft and thin material, and woven fabric or non-woven fabric as well as leather, a rubber sheet, or a resin sheet, etc., may be suitably adopted in consideration of its feel, durability, breathability, etc. The first traction band 18 especially in this embodiment is preferably made elastically deformable in the lengthwise direction (the up-down direction in FIG. 1), which is the direction of exertion of the tensile force by electric motors 17 (described later), and preferably has elasticity on the order of 0.3kgf/cm² to 0.5kgf/cm² in the lengthwise direction.

Moreover, the oblong, generally rectangular frame-shaped connecting fitting 22 is attached to the upper end of the first traction band 18, and the first traction band 18 is connected to the second traction band 20 through the connecting fitting 22. The second traction band 20 is of band shape with a substantially unchanging width dimension and is formed in a belt shape from fabric using fiber with minimal elasticity, or leather etc. The assist force transmission band 12 is formed by inserting the intermediate portion of the second traction band 20 into the connecting fitting 22 so as to connect it to the first traction band 18. Note that the second traction band 20 does not necessarily need to be something whose elasticity is suppressed, but it is preferable that at least one of the first traction band 18 and the second traction band 20 is an elastic part, and is made of something with elasticity comprising elastic fiber, etc. which is allowed elastic deformation in the lengthwise direction as mentioned above, in order to improve wearing feeling by easing the impact of the assist force and in order not to excessively hinder the user's self-conscious movement.

The first wearing part 14 is integrally provided on the lower portion of the first traction band 18 of the assist force transmission band 12. In this embodiment, the first wearing part 14 is given a shape of a sports supporter that is used in order to protect the knee joint and is, for example, formed of an elastic fabric etc., so as to be wound around the user's knee joint and worn on the knee joint part while being fixed with a hook-and-loop fastener or snaps, hooks, etc. Note that the first wearing part 14 may be formed independently of the first traction band 18, and may be attached later by adhesion or stitches, etc. In addition, it is preferable to consider forming a through hole 24 on the first wearing part 14 and positioning it at the user's kneecap so as not to prevent bending and stretching of the knee joint.

The opposite ends of the second traction band 20 of the assist force transmission bands 12 are attached to the second wearing part 16. The second wearing part 16 is composed of a transmission band support belt 26 and a drive device support belt 28 that are each worn around the waist, with the one end of the second traction band 20 attached to the transmission band support belt 26 and the other end attached to the drive device support belt 28. Note that the second wearing part 16 has a structure including the transmission band support belt 26 and the drive device support belt 28 for the purpose of enhancing fitting performance during wearing by the user or the like, wherein the two support belts 26, 28 are connected to each other on the back surface side. However, it is also acceptable to constitute the second wearing part 16 with a structure including a single wearing belt, or the like.

The transmission band support belt 26 is formed of a band-shaped fabric of minimal elasticity, and is wound around the user's waist to be worn thereon by its opposite ends connected to each other with a hook-and-loop fastener, snaps, hooks, etc. A ring-shaped pair of guide fittings 30, 30 are provided on the transmission band support belt 26, and with the transmission band support belt 26 worn on the waist, the guide fittings 30, 30 are arranged on the left and right sides thereof. One end of each of the second traction bands 20, 20 is attached to the front surface part of the transmission band support belt 26 using such means as stitches, welding, snaps, hooks or a hook-and-loop fastener. Meanwhile, the other end of each of the second traction bands 20, 20 is inserted into the corresponding one of guide fittings 30, 30 and arranged so as to go around to the back surface side, being subjected to driving force of each of the electric motors 17, 17 (which will be described later).

Furthermore, joint angle sensors 32, 32 are provided on the portions to be positioned at the respective left and right thighs during wearing by the user, in order to detect an incline angle of the thigh as a bend angle of the hip joint. The joint angle sensor 32 is acceptable as long as it can measure the bend angle of the joint, and no particular limitation is imposed as to the specific sensor type, structure, wearing position, or the like. For example, as described in Patent Document 3 mentioned above, it is also possible to employ a capacitance type sensor including a dielectric layer formed of a dielectric elastic material and a pair of electrode films formed of a conductive elastic material provided on both surfaces of the dielectric layer, and arrange it along the body side surface from the waist to the thigh.

In the present embodiment, gyro sensors are employed as the joint angle sensors 32, 32, and for example, are securely attached to and supported by the left and right first traction bands 18, 18, respectively. For such a gyro sensor, any of those known in the art can be employed as the one that detects the bend angle of the hip joint in relation to the hip bone on the waist side, which is kept approximately vertical, by detecting the incline angle of the thigh.

For example, as the gyro sensor used as the joint angle sensor 32, a triaxial angular velocity sensor etc. can be employed, which is a general MEMS (Micro Electro Mechanical System) sensor and is able to detect the angular velocity of the rotation around the orthogonally crossing three axes. Also, in combination with the gyro sensor, it is possible to install an acceleration sensor on the thigh. By performing computing of the detection signals detected by the two sensors together, improvement of the detection precision or enhanced information can be achieved. For example, by using the acceleration sensor to appropriately calibrate the reference direction of the detection value in the incline direction detected by the gyro sensor, it is possible to avoid accumulation of errors of the reference direction. Besides, by using the computing unit to perform integration operation on the angular velocity of the thigh detected by the gyro sensor with respect to the direction of gravity (vertical direction) detected by the acceleration sensor, it is possible to obtain the three-dimensional incline direction of the thigh in the four-dimensional number including the time axis. Moreover, a filtering means as a sensor fusion algorithm can also be employed in order to reduce detection errors due to noise etc. in the gyro sensor. Note that a power supply, the computing unit or the like required for the gyro sensor may be installed to the drive device support belt 28, or may also be installed to the transmission band support belt 26 etc.

Furthermore, a load sensor 34 is provided to the assist force transmission band 12 for directly detecting the load (stress) acting thereon in the direction of tension. The load sensor 34 is installed on the lengthwise middle portion of the first traction band 18 or the second traction band 20 that constitutes the assist force transmission band 12. It is also possible to install the load sensor 34 on the lengthwise end portion of the first traction band 18 or the second traction band 20 which is a mounting part or a connecting part to other components.

As the load sensor 34 as well, while any type can be employed as long as it can detect the load acting on the assist force transmission band 12, a load sensor wherein a load cell converts the load directly into the voltage value and output it may preferably be employed. It would be possible to employ a load sensor including a load cell of magnetostrictive type, capacitance type, gyro type, strain-gauge type, or the like, as well as the one including an elastic body such as a spring.

When installing the load sensor 34 on the assist force transmission band 12, in addition to the mode such that all the load acting on the assist force transmission band 12 will be input to the load sensor 34, the mode such that a part of the load will be input to the load sensor 34 may also be acceptable. For example, as the former mode, a part of the assist force transmission band 12 in the lengthwise direction may be replaced by the load sensor 34 or the like so that the force in the direction of tension will act on the assist force transmission band 12 via the load sensor 34. Alternatively, as the latter mode, the load sensor 34 may be adhered on the surface of the assist force transmission band 12 made of a material capable of extension/contraction.

In addition, it would also be possible to provide the load sensor 34 to the electric motor 17 that exerts load on the assist force transmission band 12 so that the force in the direction of tension exerted on the assist force transmission band 12 will be detected by the input end. As a specific example, by detecting the current value in the power supply circuit for the electric motor 17, the tensile force exerted on the assist force transmission band 12 can be detected by the current value as drive torque of the electric motor 17 so as to constitute the load sensor 34.

Meanwhile, as shown in FIGS. 1 through 3, the drive device support belt 28 is formed of a band-shaped fabric etc. of minimal elasticity, like the transmission band support belt 26, and is wound around the user's waist to be worn thereon while being substantially fixed thereto by its opposite ends connected to each other with a hook-and-loop fastener, snaps, hooks, etc. Moreover, the rear portion of the drive device support belt 28 extends further downward than the front portion thereof so as to obtain a larger surface area, and the drive device 38 is installed on that rear portion.

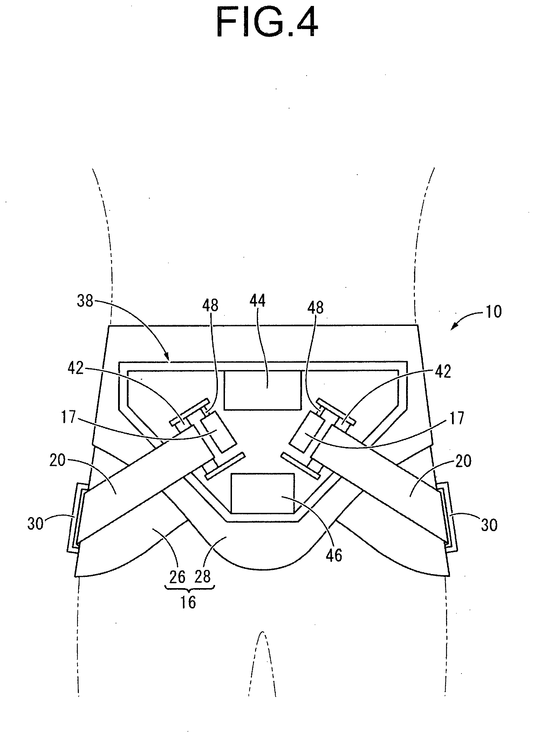

As shown in FIG. 4, drive device 38 includes a left/right pair of electric motors 17, 17 as the drive sources, a left/right pair of rotation shafts 42, 42 that are rotary driven by that pair of electric motors 17, 17, a power supply device 44, such as a battery, which supplies electrical power to the electric motors 17, 17, and a control device 46 that does operation control of the electric motors 17, 17 based on the detection result in the joint angle sensors 32, 32.

Each electric motor 17 preferably employs a servo motor, etc., which can detect the rotational position and can control the amount of rotation in both the forward and reverse directions. The rotating drive force of drive shafts 48 for the electric motors 17 that are driven by the electric power supplied from the power supply device 44 is transmitted to the rotation shafts 42 via a suitable reduction gear train. The rotation shaft 42 is a rod-shaped component that is supported so as to be allowed to rotate in the circumferential direction, and the other end of the second traction band 20 is fixed and wound around its outer peripheral surface. By so doing, the other end of the second traction band 20 is attached to the drive device support belt 28 via the drive device 38, whereby the assist force transmission band 12 is arranged across the hip joint.

The second traction band 20 of the assist force transmission band 12 is wound up onto the rotation shaft 42 by the rotation shaft 42 being turned in one circumferential direction through the driving force exerted from the drive shaft 48 for the electric motor 17. By so doing, the driving force from the electric motor 17 is transmitted in the lengthwise direction of the assist force transmission band 12 (the lengthwise direction of the first traction band 18 and the second traction band 20) and is exerted between the first wearing part 14 and the second wearing part 16 as a tensile force.

Note that the second traction band 20 is folded back at the connecting fitting 22 which serves like a running block. Thus, the driving force of the electric motor 17 exerted on the second traction band 20 will be increased and whose direction of tension will be converted, thereby acting in the lengthwise direction of the first traction band 18. Besides, as the electric motor 17, by employing a servo motor etc. incorporating a rotary encoder 50 which serves as an encoder, it is possible to directly detect the amount of winding as the amount of traction in the direction of ; tension exerted on the assist force transmission band 12 by the electric motor 17. By so doing, a traction-amount control means can be provided to do operation control of the electric motor 17 based on the detection value detected by the rotary encoder 50 in order to control the amount of traction of the assist force transmission band 12 to an intended value. In addition to the control by using the tensile force to be described as follows, by concomitantly employing the control by using the amount of winding, reliability of the control or the like will also be improved.

Meanwhile, when the rotation shaft 42 is rotated by the electric motor 17 in the other circumferential direction, the winding of the assist force transmission band 12 by the rotation shaft 42 is canceled and the assist force transmission band 12 is unwound, and the tensile force between the first wearing parts 14 and the second wearing part 16 is released.

However, reverse rotation of the electric motors 17 is not absolutely necessary, and the tensile force between the first wearing part 14 and the second wearing part 16 may be canceled by simply stopping the electric supply to the electric motor 17 and freeing the output shaft of the electric motor 17 so as to allow the assist force transmission band 12 to freely unwind. In this way, it is possible for the assist force transmission band 12 to easily follow walking movement and be unwound in accordance with movement based on the user's muscular strength without being excessively slacked and without having tensile force to the extent of becoming a resistance to that movement.

The control of the electric motors 17 is performed by the turning of the supply of electric power from the power supply device 44 to the electric motors 17 on and off as well as by the current direction (the rotational direction of the drive shaft 48) being controlled by the control device 46. The control device 46 detects the bending movement, extension movement, etc. of the user's hip joint based on the detection result (output signal) in the joint angle sensor 32 or the like, and controls the supply of electric power to the electric motor 17 according to the detected movement of the hip joint. By so doing, the tensile force exerted between the first wearing part 14 and the second wearing part 16 based on the driving force of the electric motor 17 is configured to be adjusted by the control device 46.

Here, in the present embodiment, the control device 46 includes the following three control means in combination, and is configured to perform these three controls:
(I) an assist timing control means to determine a start timing of the winding operation of the electric motor 17 as the operation timing of the driving means based on a bend angle value of the hip joint detected by the joint angle sensor 32, when exerting tensile force on the assist force transmission band 12 with winding operation of the electric motor 17 and applying assist force that assists muscular strength of the leg during walking;
(II) an assist force control means to perform a feedback control and adjust an output level of the electric motor 17 based on the detection value detected by the load sensor 34 in order to bring a load acting on the assist force transmission band 12 to a predetermined target value of the assist force during applying of the assist force mentioned in the item (I); and
(III) a slack prevention control means to perform a feedback control and adjust an output level of the electric motor 17 based on the detection value detected by the load sensor 34 in order to bring the load acting on the assist force transmission band 12 to a predetermined target value of the bias force that can eliminate the slack of the assist force transmission band 12 during non-action of the assist force in which the assist force mentioned in the item (I) is not applying.

Specifically, the control means of the electric motors 17, 17 provided by the control device 46 is configured to utilize the detection value of the left/right hip joint angles detected by the joint angle sensor 32 and the detection value of the tensile load of the left/right assist force transmission bands 12 detected by the load sensor 34 as the reference signals, and to supply electric power from the power supply device 44 comprising a secondary battery such as a mobile battery to the electric motors 17, 17 in order to satisfy the control conditions of the electric motors 17, 17 that correspond to the predetermined assist timing, assist force, or bias force.

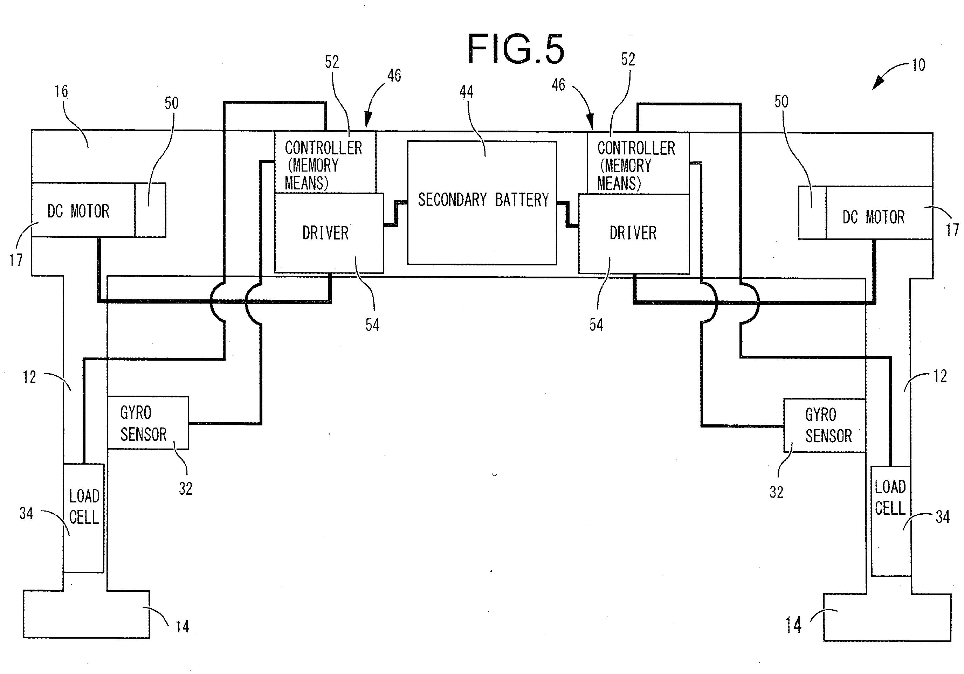

As a specific example, as shown in FIG. 5 in the form of a functional block diagram of hardware, the control device 46 includes a controller 52 equipped with a memory means such as ROM, RAM or the like, and a driver 54 that supplies the electric power from the power supply device 44 to the electric motors 17, 17 in accordance with the command value from the controller 52. That is, the control device 46 stores a control program in advance, and is configured to realize each of functions, namely the aforementioned (I) assist timing control means, (II) assist force control means, and (III) slack prevention control means based on the detection value of the joint angle obtained from the joint angle sensors 32, 32 comprising the left/right gyro sensors and the detection value of the tensile load exerted on the assist force transmission band 12 obtained from the left/right load sensors 34, 34. Note that in the present embodiment, by individually controlling the power supply to the left and right electric motors 17, 17, the assist force can be controlled to be exerted separately on each of the left and right legs.
(I) The assist timing control means is, for example, constituted by hardware and software as follows. Namely, in accordance with the assist timing control program stored in ROM or RAM in advance, the control device 46 utilizes the hip joint angle output from the left/right joint angle sensors 32, 32 as the reference signal, and when the hip joint angle reaches the hip joint angle for starting power supply preset in the memory means (52), the control device 46 issues an assist start signal and starts power supply from the power supply device 44 to the electric motor 17. Control by the assist timing control means will be performed subject to determination of walking state due to the hip joint angle output from the left/right joint angle sensors 32, 32 changing at the prescribed periods, or the like.
(II) The assist force control means is, for example, constituted by hardware and software as follows. Namely, in accordance with the assist force control program stored in ROM or RAM of the control device 46 in advance, the control device 46 utilizes the tensile load obtained as the output value of the left/right load sensors 34, 34 as the reference signal, and controls the power supply from the power supply device 44 to the electric motor 17 in order to bring the tensile load to the target value for assisting preset in the memory means (52). The target value for assisting is desirably given with a pattern that changes over time for a prescribed time period, with the assist start time as a starting point, for example, and can be set as map data that changes over time or a function value on the time axis. Besides, control by the assist force control means will be performed subject to issuance of the assist start signal by the assist timing control means on the premise of being in a walking state, for example.
(III) The slack prevention control means is, for example, constituted by hardware and software as follows. Namely, in accordance with the slack prevention control program stored in ROM or RAM of the control device 46 in advance, the control device 46 utilizes the tensile load obtained as the output value of the left/right load sensors 34, 34 as the reference signal, and controls the power supply from the power supply device 44 to the electric motor 17 in order to bring the tensile load to the target value for slack prevention preset in the memory means (52). The target value for slack prevention is desirably given with an approximately fixed value for which the user will not feel unnatural sense during walking. Besides, control by the slack prevention control means will be continuously performed, on the premise of being in a walking state, for example, from the time when the control of the tensile load by the assist force control means is finished to the time when the next assist start signal is issued by the assist timing control means.

By operating the electric motors 17, 17 with the control device 46 by using these (I) assist timing control means, (II) assist force control means, and (III) slack prevention control means, the assist force is configured to act through the assist force transmission bands 12, 12 as a movement assist force around the hip joint during the user's walking movement, so as to perform walking assistance. In the present embodiment in particular, the assist force will act when swinging out the swinging leg forward during walking.

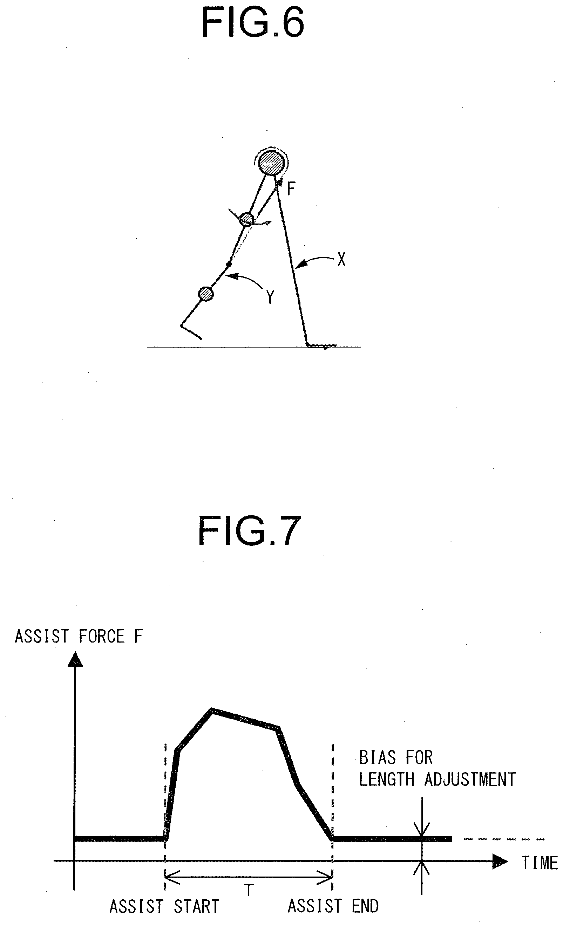

Specifically, as illustrated in a specific view of FIG. 6, human walking is performed by the left/right pair of legs X, Y alternately swinging out forward and periodically moving forward and backward. With this walking operation, in order to maintain the kinetic energy of moving the center of gravity forward against the walking resistance due to a walking surface incline or the like, not only the energy such as weight bearing given by the muscle activity of the grounding leg X, but also the movement of the swinging leg Y floating up from the ground play an important role. In specific terms, the leg extended backward when walking becomes the swinging leg Y for which the tip of the toe is separated from the ground to the rear of the person's center of gravity, and walking proceeds in a state of single leg standing wherein only the leg X extended forward is grounded. Meanwhile, the swinging leg Y floats up from the ground in a state of greatly extending out backward when walking, and by utilizing the gravity acting on the swinging leg Y as well, swings out forward due to swinging around the hip joint from the rear of the person's center of gravity. This pendulum movement by the swinging out of the swinging leg Y also acts as kinetic energy that advances the center of gravity forward.

However, with a person with decreased walking ability due to aging or the like, since the stride length is short and the speed is slow, sufficient gravity effect cannot be obtained even when that swinging leg Y has floated up to the rear, which makes it difficult for the pendulum movement of the swinging leg Y to exhibit an effect. As a result, it is conceivable that a person with decreased walking ability is not able to walk smoothly, and walking itself becomes a pain, so they stop walking, leading to even further decrease in leg muscle strength. Here, with the walking movement assisting device 10 of the present embodiment, by exerting supplementary assist force F on the swinging leg Y at appropriate timing so as to support the pendulum movement on the swinging leg Y, the pendulum movement of the swinging leg Y is accelerated, so that the user's walking is given a rhythm and also made more efficient. In particular, since the assist force F is exerted on the swinging leg Y floating up from the ground, it is possible to assist walking by efficiently doing displacement movement of the swinging leg Y with a small force. In addition, with the grounding leg X that is grounded and supports the body weight, effective training of muscle strength is also possible by mainly using the user's own muscular strength.

The assist force F is configured to be exerted around the user's hip joint as the tensile force through the assist force transmission band 12 by the electric motor 17. FIG. 7 shows an example of a time-dependent pattern of the acting force. Specifically, during walking, the joint angle sensor 32 detects a periodic changing pattern. Thus, the aforementioned (I) assist timing control means determines the timing of assist start, and the assist force F will be exerted on the swinging leg Y from the assist start time to the assist end time, with the amount of assist force F being appropriately adjusted.

The assist end time can be set as the time when a prescribed time has passed since the assist start time, for example, or alternatively can be set as the time when the detection value of the hip joint detected by the joint angle sensor 32 has reached a prescribed angle value, and the like. Besides, the action period T, in general, is preferably set as the period from approximately the same time when, during walking, the leg extended backward is separated from the ground to become a swinging leg to the time slightly before when the swinging leg lands on the ground after being swung out forward, namely, as the period slightly shorter than the period of being a swinging leg that is taking off from the ground.

In order to efficiently perform walking assistance while avoiding giving unnatural sense for walking, it is desirable that the target amount of the assist force F be set, for example, such that the force will greatly exhibit during the initial timing when the swinging leg is swung out forward from the rear, while the force will be gradually decreased after the swinging leg is swung out forward so as not to hinder the landing. Specifically, it can be preferably set with a mountain-shaped profile in which the peak point exists before the middle of the action period T of the assist force F. The target assist force is such that a mountain-shaped profile repeats at intervals of a prescribed time period corresponding to a periodic bending movement of the hip joint from the swinging leg Y to the grounding leg X, or from the grounding leg X to the swinging leg Y. Namely, the target assist force can be given as a periodic waveform profile.

Moreover, in the present embodiment, the amount of the assist force F exerted on the leg through the assist force transmission band 12 is directly detected by the load sensor 34 comprising the load cell installed to the assist force transmission band 12, and the electric motor 17 is feedback-controlled in order to bring the force to the target amount of the assist force F based on the detection value. Therefore, the target amount of the assist force as illustrated in FIG. 7 can be obtained with high accuracy.

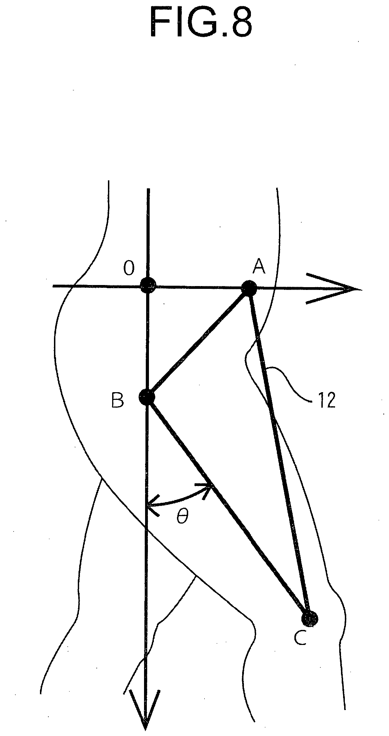

Meanwhile, as diagrammatically shown in FIG. 8, if the position of the upper end of the assist force transmission band 12 worn on the user is taken as fulcrum A, the hip joint position of the user is taken as fulcrum B, and the position of the lower end of the assist force transmission bands 12 worn on the user is taken as fulcrum C, then the length of side AC of a triangle ABC, which is equivalent to the length for which the assist force transmission bands 12 is bridged, changes accompanying the change of the hip joint angle θ during walking. In addition, point O in FIG. 8 is the intersection of the horizontal line that passes through fulcrum A and the vertical line that passes through fulcrum B. Moreover, the position of fulcrum A is substantially the center position between the attachment position of one end of the second traction band 20 to the transmission band support belt 26 and the guide fitting 30 into which the second traction band 20 is inserted.

Therefore, other than the aforementioned state where the assist force transmission band 12 is wound up by the electric motor 17 and action of the assist force due to tensile force is controlled, if the electric motor 17 does not operate and the assist force transmission band 12 is left with its length unchanged, a slack or an excessive tensile will occur in the assist force transmission band 12 due to walking.

Accordingly, in the present embodiment, during non-action of the assist force, by controlling the electric motor 17 with (III) the slack prevention control means, a generally constant small tensile force is kept exerted on the assist force transmission band 12 as the slack prevention force. When controlling the slack prevention, the detection value detected by the load sensor 34, which directly detects the tensile stress of the assist force transmission band 12, is utilized as the reference signal, and the electric motor 17 is feedback-controlled so as to bring the detection value to the targeted constant tensile force.

By performing such slack prevention control, as shown in FIG. 7, a prescribed bias force (small tensile force) acts on the assist force transmission band 12 over the substantially entire period excluding the action period T of the assist force F. In this way, by continuously preventing slack of the assist force transmission band 12, at the time of starting assistance by (I) the assist timing control means, for example, when exerting the assist force F set in (II) the assist force control means, the tensile force by the assist force transmission band 12 immediately starts up accompanying operation of the electric motor 17. Therefore, the desired assist force will be exerted on the swinging leg without almost any time lag, thereby making it possible to exert the assist force with a preferable pattern for walking on the swinging leg with sufficient accuracy.

In the present mode in particular, during action of the assist force F as well, the tensile stress of the assist force transmission band 12 is directly feedback-controlled with (II) the assist force control means by the detection value detected by the load sensor 34. Thus, in addition to realizing the immediate start-up of the assist force F at the time of starting action, control malfunctions including shortage of the assist force F, overshoot, and divergence as well will be effectively prevented, thereby concomitantly achieving followability to the target value with high accuracy.

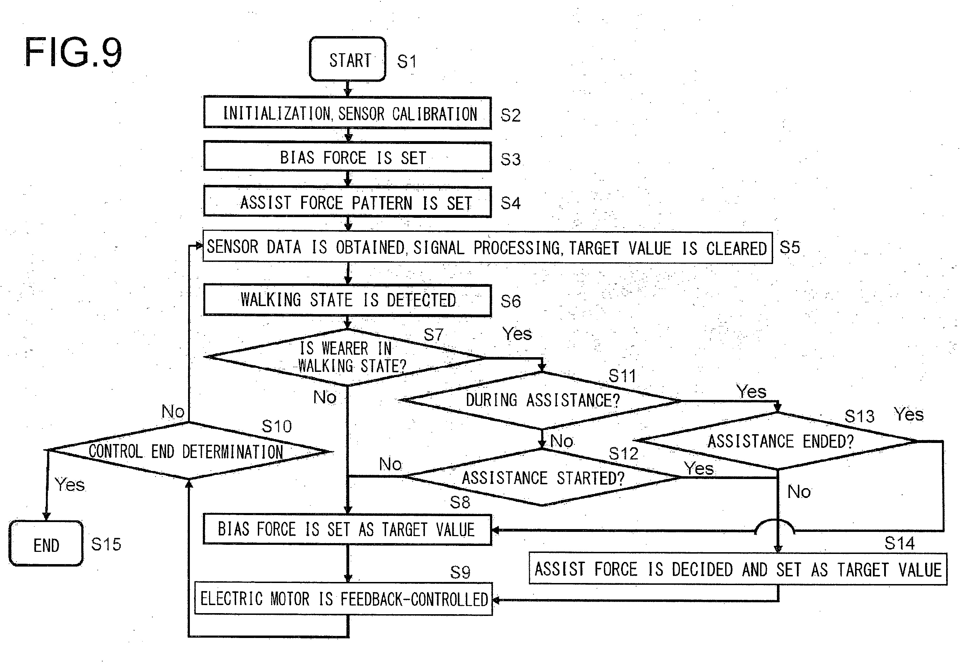

Incidentally, the whole flow of the walking assistance control, with the walking movement assisting device 10 of the present embodiment as described above, will be illustrated according to the flow chart in FIG. 9, which shows one control mode.

First, when control starts in Step S1, in an initialization step in Step S2, sensor calibration such as origin determination of the joint angle sensor 32 or the load sensor 34 is performed. Next, in Step S3, the bias force of the load sensor 34 is set, which is the target value in controlling exertion of the bias force on the assist force transmission band 12 for slack prevention. Additionally, in Step S4, the pattern of the assist force that assists muscular strength during walking (the time-dependent change profile of the amount of the assist force as shown in FIG. 7) is set.

Then, in Step S5 and subsequent steps, drive control of the electric motor 17 is performed so as to start assisting operation. Note that the control of the electric motor 17 described below may be performed alternately to the left and right legs to be targeted, or may alternatively be performed by providing independent control systems individually to the left and right legs.

Specifically, in Step S5, the detection values of the hip joint angles of the left/right legs are obtained from the respective left/right joint angle sensors 32, 32, and the detection values of the tensile forces of the left/right assist force transmission bands 12, 12 are obtained from the respective left/right load sensors 34, 34, then signal processing is performed to store them in RAM of the control device 46 as angle signals or assist force signals. In subsequent Step S6, based on the detection results of the left/right joint angle sensors 32, 32 obtained in Step S5, periodic changes in the hip joint angles of the left/right legs are detected, so as to recognize the current state of the wearer.

Then, in Step S7, the current state whether the wearer is in a walking state or not is determined. If the wearer is determined not to be in a walking state, in Step S8, the bias force set in Step S3 is set as the control target value. After that, Step S9 is executed, so that, in order to make the control target value be the tensile force of the assist force transmission band 12, operation control is done on the electric motor 17 with the detection value detected by the load sensor 34 utilized as the reference signal, thereby exerting a constant slack prevention force (bias force) on the assist force transmission band 12.

Besides, during the period until when the assist control operation is determined to be ended by input from a switch or the like that cuts off the power feed from the power supply in Step S10, the controls of Steps S5 to S9 above are repeatedly executed at the prescribed intervals. Accordingly, during the period until when the walking starts, the above constant slack prevention force is kept exerted.

On the other hand, if the current state of the wearer is determined to be in a walking state in Step S7, the process advances to Step S11, which determines whether or not being in the action period T of the assist force based on the detection value of the hip joint angle detected by the joint angle sensor 32. If determined not to be in the action period T of the assist force, Step S12 determines whether or not the hip joint angle detected by the joint angle sensor 32 has reached the preset angle value for the assist start.

If the detection value of the hip joint angle is determined not to have reached the value for the assist start point yet, the process advances to Step S8 and returns to the control loop for generating the aforementioned slack prevention force (bias force).

On the other hand, in Step S11, if determined to be in the action period T of the assist force (see FIG. 7), namely, during action of the assist force, the process advances to Step S13, which determines whether or not to be prior to the end of the action period T of the assist force. The end of the action period T of the assist force can be determined by, for example, the time data from the assist start time to the assist end time, or by the value of the hip joint angle for which the assistance is determined to be ended etc., which is input in Step S4 above.

Then, if determined to be prior to the end of the assistance period T in Step S13, and if determined that the assistance period T has started in aforementioned Step S12, the process advances to Step S14, which controls generation of the assist force. For that purpose, at first, in Step S14, by utilizing the assist force pattern input in Step S4 above, the assist force at the present time is obtained and decided, which is set as the target value. Subsequently, the process advances to Step S9, and in order to make the control target value be the tensile force of the assist force transmission band 12, operation control is done on the electric motor 17 with the detection value detected by the load sensor 34 utilized as the reference signal, thereby exerting the assist force on the assist force transmission band 12.

In this way, during the period until when the assist control operation is determined to be ended in Step S10, the controls including Steps S11 to S14 above are repeatedly executed at the prescribed intervals. Accordingly, during the assistance period T, the controls of the assist force will be executed with the preset pattern of the assist force. Note that if the assistance period T is determined to be ended in Step S13, the process advances to Step S8, which is the same as with the case to be determined not to have reached the assist start point, and returns to the control loop for generating the aforementioned slack prevention force (bias force).

As described above, the control operation of the bias force and the assist force by means of the feedback control of the electric motor 17 will continue until when the assist control operation is determined to be ended in Step S10 and the process reaches Step S15 to be ended.

By wearing the walking movement assisting device 10 according to the present embodiment as described above, a part of the force required for bending the hip joint will be supplemented by the assist force exerted on the user's leg as the tensile force of the assist force transmission bands 12, 12 based on the generative force of the electric motor 17. Therefore, it is possible to perform the target movement with minimal muscular strength, for example, when performing the movement of bending the hip joint to bring the back leg forward when walking. Accordingly, even if the user does not have sufficient muscular strength to perform movement due to aging, illness or injury, the target walking movement can be performed smoothly, making it possible to prevent restrictions in user activity.

Moreover, the first traction band 18 of the assist force transmission band 12, which is provided on the path on which the generative driving force of the electric motor 17 is transmitted to the user's leg as the assist force, is made flexible, and more preferably, is made elastically deformable in the direction of transmission of the force. By so doing, the generative driving force of the electric motor 17 is only exerted on the user's leg after being eased by the flexible deformation or elasticity of the first traction band 18. Thus, in comparison with when the generative driving force of the electric motor 17 is transmitted directly through the transmission system comprising a rigid skeleton structure, the load on the user's joint, etc., can be mitigated, thereby preventing problems such as muscular pain or the like.

Incidentally, the walking movement assisting device 10 constructed according to the present embodiment was actually worn by a non-handicapped person, and tests for supporting walking were performed to confirm (1) the control accuracy for the assist force by the feedback control of the electric motor 17 and (2) the support effect when walking.

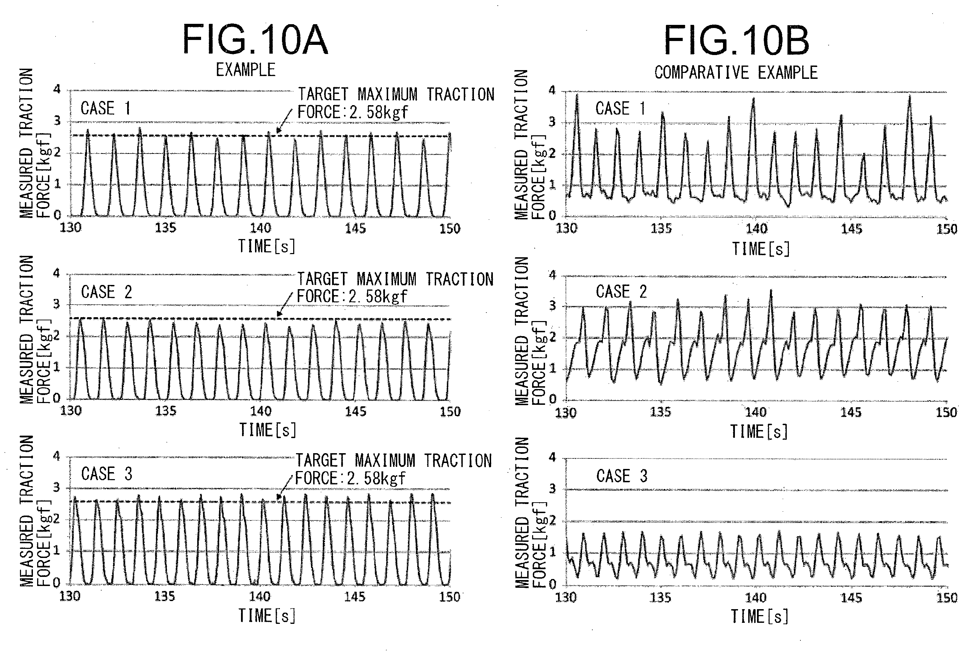

First, the item (1) was evaluated by detecting the tensile force detected by the load sensor 34 when a target value profile of mountain shape was set as the pattern of the assist force F and controls were executed for three persons having different walking modes. As shown in FIG. 10A, it will be appreciated that, with Example having a feedback control system as illustrated in FIG. 9, the targeted assist force was stably exhibited in each case. On the other hand, with Comparative Example lacking the feedback control system and performing controls in a feedforward way, as shown in FIG. 10B, it was difficult to stably obtain the targeted assist force, thereby having difficulty in sufficiently achieving the desired walking assistance effect.

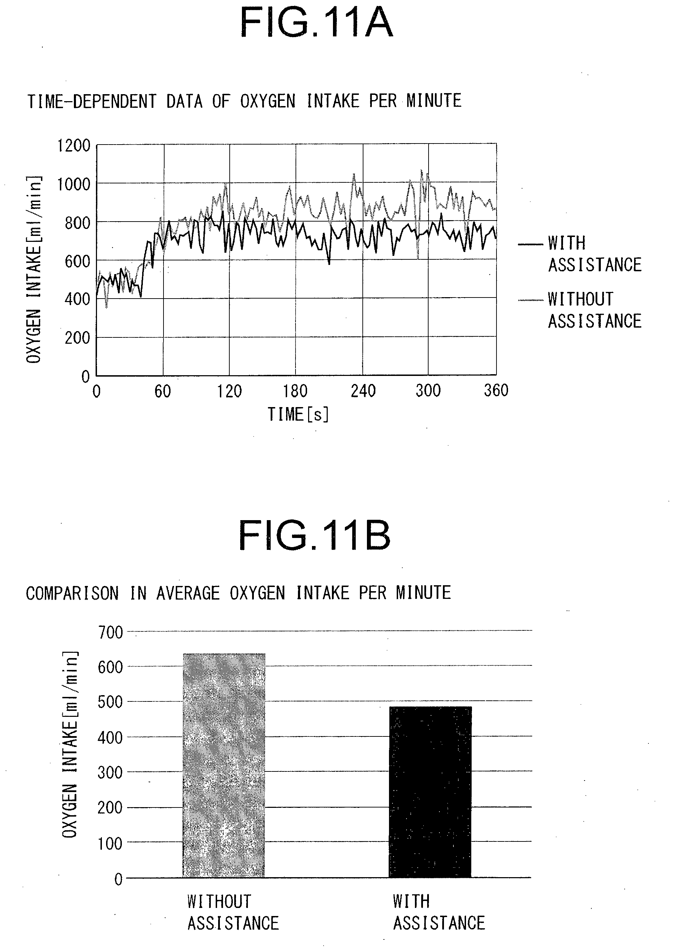

Also, the item (2) was evaluated by measuring oxygen consumption when the users wore each of the walking movement assisting devices having control systems of Example and Comparative Example employed in the test (1) and walked for a prescribed time period under the same conditions. As shown in FIGS. 11A and 11B, it will be appreciated that, with Example having a feedback control system as illustrated in FIG. 9, oxygen consumption during wearing was lower than the oxygen consumption with Comparative Example lacking the feedback control system, and more effective function for supporting walking movement was achieved.

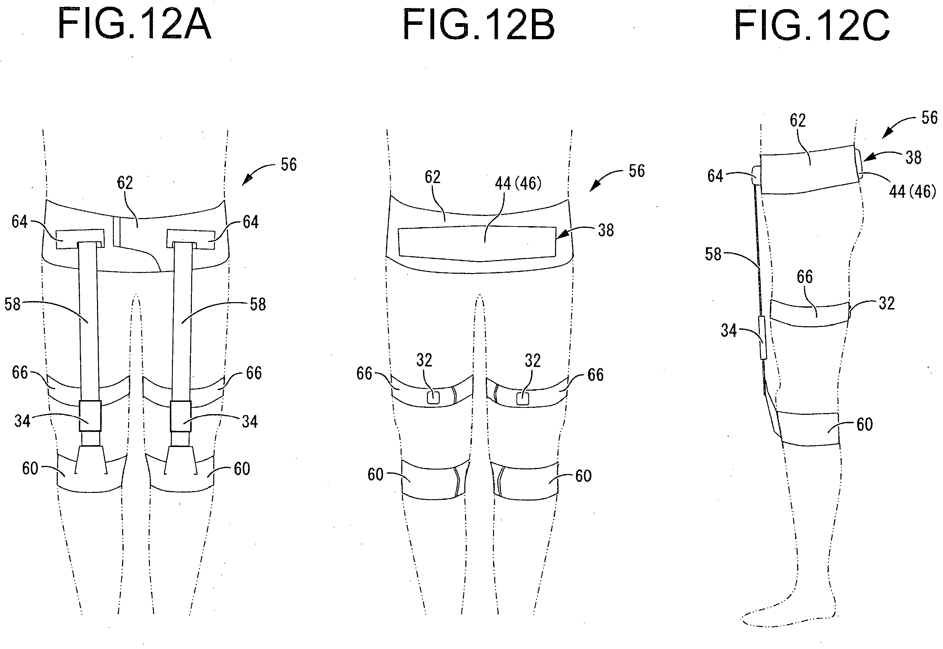

Next, FIGS. 12A through 12C depict a walking movement assisting device 56 according to a second embodiment of the present invention. In the present embodiment, an assist force transmission band 58 serving as an assist force transmission part has a structure that straightly extends in a generally up-down direction at each front of the left/right femurs of a user across the hip joint. For each of the left/right assist force transmission bands 58, the lower end thereof is attached to a first wearing part 60 worn on the thigh side of the user, while the upper end thereof is attached to a second wearing part 62 worn on the waist side of the user. In the following description, components and parts that are substantially identical with those in the preceding first embodiment will be assigned like symbols and not described in any detail.

Specifically, in the preceding first embodiment, the assist force transmission band 12 is constituted by the first traction band 18 and the second traction band 20 being connected by the metal connecting fitting 22 to each other. On the other hand, the assist force transmission bands 58, 58 according to the present embodiment are each constituted with a substantially single belt structure that extends in a straight line.

The first wearing part 60 has a belt shape to be wound and worn near the knee joint on the lower side of the thigh, like the first wearing part (14) of the first embodiment. Meanwhile, whereas in the preceding first embodiment the second wearing part 16 has a divided structure including the transmission band support belt 26 and the drive device support belt 28, the second wearing part 62 of the present embodiment has a single belt structure to be wound and worn near the waist.

Then, the first wearing part 60 and the second wearing part 62 having a belt shape with a prescribed length in this way is configured to be wound around the user and fixed with a hook-and-loop fastener or the like, so as to be worn at substantially fixed locations near the knee and the waist of the user.

In addition, the lower ends of the assist force transmission bands 58, 58 arranged at the front of the left/right thighs are attached to the respective left and right first wearing parts 60, 60 by being adhered thereto through bonding, welding, stitches etc. or being integrally formed therewith. Then, when worn by the user, the first wearing part 60 is configured to be arranged so as to extend upward from the knee or its vicinity on the body front surface.

Meanwhile, the second wearing part 62 includes a left/right pair of electric motors 64, 64 serving as a driving means and fixedly attached to the sites each configured to be positioned above the hip joint of the corresponding left/right leg on the body front surface when worn by the user. Besides, to each of the electric motors 64, 64, a rotation shaft subjected to rotational force is provided so as to extend in the generally horizontal direction. Moreover, each upper end of the assist force transmission bands 58, 58 is fixed and wound around the corresponding rotation shaft. By exerting the rotating drive force of the electric motor 64 on the rotation shaft, the upper end of the assist force transmission band 58 will be wound up so as to make the effective length of the assist force transmission band 58 shorter. Accordingly, the external force in the direction of tension will be exerted on the first wearing part 60 via the assist force transmission band 58.

A power supply device 44 and a control device 46 for controlling the power supply to the electric motors 64, 64 so as to control the assist force exerted on the user by the assist force transmission band 58 are provided on the rear side of the second wearing part 62, similar to the first embodiment described previously.

Moreover, load sensors 34, 34 are installed on the respective left and right assist force transmission band 58, 58, each positioned at lengthwise middle portion thereof. By interposing the load sensor 34 between divided portions of the assist force transmission band 58, for example, and connecting the divided portions of the assist force transmission band 58 via the load sensor 34, all tensile load exerted on the assist force transmission band 58 can be exerted on the load sensor 34. It would alternatively be possible to adhere the load sensor 34 on the surface of the assist force transmission band 58, or to divide the assist force transmission band 58 partly in the widthwise direction and interpose the load sensor 34 therein, so that a part of tensile load exerted on the assist force transmission band 58 will be exerted on the load sensor 34. It is acceptable as long as the amount of change in the tensile load acting on the assist force transmission band 58 can be detected by the load sensor 34 during walking or the like.

Furthermore, the present embodiment includes fastening bands 66, 66 as separate elements from the assist force transmission bands 58, 58 for attaching joint angle sensors 32, 32. Specifically, by using the fastening band 66 fixedly attached to the user's thigh and installing the joint angle sensor 32 thereon to support, the joint angle sensor 32 is configured to be fixedly attached on the back surface side of the thigh. As the fastening band 66, any wearing structure including a winding belt using elasticity of rubber etc., a fastening belt using a hook-and-loop fastener, or the like, is employable. Besides, with regard to the location where the joint angle sensor 32 is attached, it is good enough to detect the incline angle of the thigh, thus the location can be desirably set within ranges not hampering movement of the user, operation of the assist force transmission band 58, or the like.

The walking movement assisting device 56 according to the present embodiment operates in a manner similar to the walking movement assisting device 10 in the preceding first embodiment, thereby exhibiting a similar effect. In particular, when compared to the first embodiment, the assist force transmission bands 58, 58 each have a single belt structure. Thus, tensile-driving resistance of the assist force transmission band by the electric motor will be lower than that in the first embodiment, for example. Accordingly, the rotating drive force of the electric motors 64, 64 is able to more efficiently act as the assist force during swinging movement of the thigh in the front-back direction accompanying walking.

In addition, in comparison with the preceding embodiment, during exerting the tensile force through the assist force transmission bands 58, 58, the amount of winding of the belt by the electric motor is decreased as well. Thus, it is also possible to more directly control the assist force or the bias force exerted via the assist force transmission band 58 by using the electric motor 64.

While the present invention has been described in detail hereinabove in terms of the preferred embodiments, the invention is not limited by the specific disclosures thereof. For example, the first wearing parts may be worn on the thigh above the knee joint and thereby realizing miniaturization of the device. Note that the disclosed joint-movement assisting device is not limited to assistance for movement around hip joints, and is adaptable to implementation in assistance for movement around joints of elbows or shoulders, for example. As a specific example, in the case where the user implements rehabilitation movements accompanied by periodic bends of joints such as push-ups, shoulder turnings etc., movement assistance will be realized by exerting the assist force as in the case of walking.

Also, the location on which the control device and the power supply device are worn is not limited and, for example, they can be worn in such ways as being kept in the pocket of the user's clothes as an independent structure connected by a lead wire for power, or they can be slung on the user's shoulder. In the case where the assist force is exerted for movement for which the user does not change locations by using a treadmill etc., it is also possible to supply the power from an installed battery, an outlet of household power supply, or the like.

Moreover, the assist force transmission parts are not necessarily limited to being flexible overall; they may partially have rigid portions formed by metal, synthetic resin, etc. Besides, when giving elasticity to the assist force transmission part as well, the whole of the assist force transmission parts may be made elastically deformable in the direction of transmission of the force, or the assist force transmission parts may also be allowed elastic deformation partially in the direction of transmission of the force.

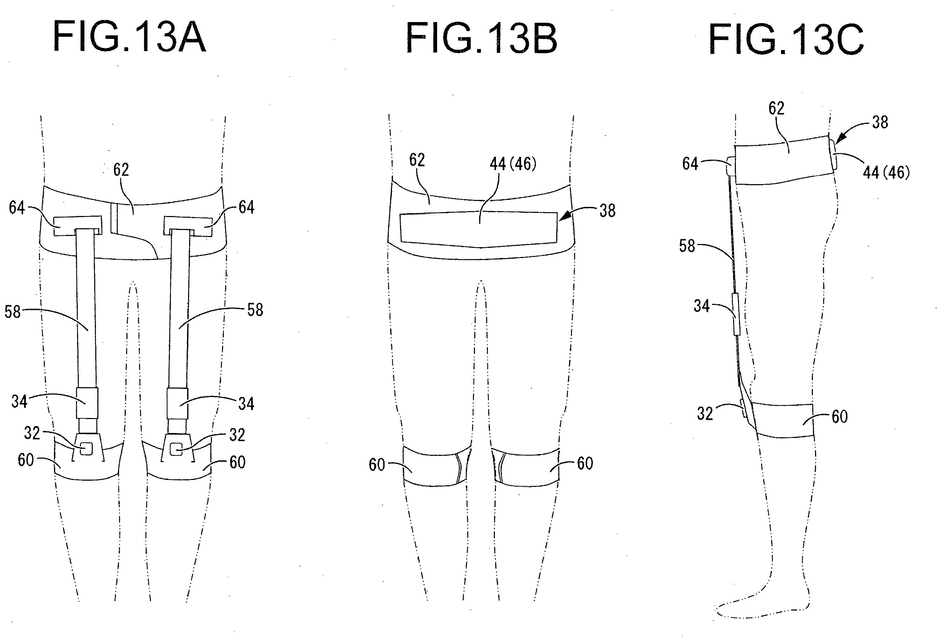

Furthermore, the location to which the joint angle sensor is installed is not limited in particular as long as the bend angle of the target joint can be measured. Specifically, it is not necessary to install the joint angle sensor on the back side of the thigh as in the second embodiment. Alternatively, as depicted in FIGS. 13A through 13C for example, the joint angle sensors 32, 32 such as gyro sensors etc. may be installed to any location, namely, near the lower end on the front surface side of the user's thigh or the like. Also, as depicted in FIGS. 13A through 13C, it is also acceptable to attach the joint angle sensor 32 to the first wearing part 60 etc., for example, without needing any special fastening band employed in the second embodiment. Of course, if the joint angle sensor 32 is installed on the assist force transmission band 58, the detected angle would not match with the incline angle of the thigh with high accuracy. Thus, it is desirable to install the joint angle sensor 32 on the site which inclines in substantially equal way with the thigh, such as the end of the assist force transmission band 58 that is fixed to the first wearing part 60, in order to reduce errors in measuring bend angles of the hip joint.

### KEYS TO SYMBOLS

10, 56: walking movement assisting device (joint-movement assisting device), 12, 58: assist force transmission band (assist force transmission part), 14, 60: first wearing part, 16, 62: second wearing part, 17, 64: electric motor (driving means), 32: joint angle sensor, 34: load sensor, 50: rotary encoder (encoder)

## Claims

1. A joint-movement assisting device (10, 56) including:
at least one flexible assist force transmission band (12, 58);
a first wearing part (14, 60) provided at a first end of the assist force transmission band (12, 58);
a second wearing part (16, 62) provided at a second end of the assist force transmission band (12, 58), the first wearing part (14, 60) and the second wearing part (16, 62) being configured to be worn on a first site and a second site sandwiching a joint of a user, respectively;
a driving means (17, 64) to exert an assist force in a direction of tension on the assist force transmission band (12, 58);
a joint angle sensor (32) to detect a bend angle of the joint of the user;
a load sensor (34) to detect the load acting on the assist force transmission band (12, 58) in the direction of tension; and
an assist timing control means to determine an operation timing of the driving means (17, 64) based on a detection value detected by the joint angle sensor (32), the joint-movement assisting device (10, 56) being **characterized in that**:
(i) an assist force control means is provided to adjust an output level of the driving means (17, 64) in order to bring a load acting on the assist force transmission band (12, 58) to a target value of the assist force when the assist force control means determines that the user is in a walking state within an action period of the assist force based on detection result in the joint angle sensor (32);
(ii) a slack prevention control means is provided to operate the driving means (17, 64) and exert a preset bias force on the assist force transmission band (12, 58) in order to eliminate a slack of the assist force transmission band (12, 58) when the slack prevention control means determines that the user is in the walking state outside the action period of the assist force or in a non-walking state based on detection result in the joint angle sensor (32);
for the assist force control means, an operation of the driving means (17, 64) is configured to be feedback-controlled based on a detection value detected by the load sensor (34) in order to bring the load acting on the assist force transmission band (12, 58) to the target value of the assist force,
for the slack prevention control means, the operation of the driving means (17, 64) is configured to be feedback-controlled based on a detection value detected by the load sensor (34) in order to bring the load acting on the assist force transmission band (12, 58) to the preset bias force to be targeted, and
control by the slack prevention control means is continuously performed from a time when control of a tensile load by the assist force control means is finished to a time when a next assist start signal is issued by the assist timing control means.

2. The joint-movement assisting device (10, 56) according to claim 1, wherein the assist force transmission band (12, 58) includes an elastically deformable elastic part in at least a portion thereof in a lengthwise direction.

3. The joint-movement assisting device (10, 56) according to claim 1 or 2, wherein
an encoder is provided to the driving means (17, 64) to detect an amount of traction of the assist force transmission band (12, 58) in the direction of tension, and
a traction-amount control means is provided to do operation control of the driving means (17, 64) based on a detection value detected by the encoder in order to lead the amount of traction of the assist force transmission band (12, 58) to an intended value.

4. The joint-movement assisting device (10, 56) according to any one of claims 1-3, wherein the target value of the assist force of the assist force control means is given as a periodic waveform that corresponds to a periodic bending movement of the joint.

5. The joint-movement assisting device (10, 56) according to any one of claims 1-4, wherein
the joint angle sensor (32) detects an angle of a hip joint of the user,
the at least one assist force transmission band (12, 58) comprises a pair of assist force transmission bands (12, 58) provided for left and right legs, and
the assist force is configured to be exerted on each of the left and right legs for a walking movement of the user.

## Patentansprüche

1. Gelenkbewegungsunterstützungsvorrichtung (10, 56), enthaltend:
zumindest ein flexibles Unterstützungskraftübertragungsband (12, 58);
ein erstes Verschleißteil (14, 60), das an einem ersten Ende des Unterstützungskraftübertragungsbandes (12, 58) bereitgestellt ist;
ein zweites Verschleißteil (16, 62), das an einem zweiten Ende des Unterstützungskraftübertragungsbandes (12, 58) bereitgestellt ist, wobei das erste Verschleißteil (14, 60) und das zweite Verschleißteil (16, 62) konfiguriert sind, an einer ersten Stelle bzw. einer zweiten Stelle getragen zu werden, die jeweils ein Gelenk eines Benutzers umgeben bzw. einklemmen;
Antriebsmittel (17, 64) zum Ausüben einer Unterstützungskraft in einer Spannungsrichtung auf das Unterstützungskraftübertragungsband (12, 58);
einen Gelenkwinkelsensor (32) zum Erfassen eines Biegewinkels des Gelenks des Benutzers;
einen Lastsensor (34) zum Erfassen der Last, die auf das Unterstützungskraftübertragungsband (12, 58) in der Spannungsrichtung wirkt; und
ein Unterstützungszeitsteuerungs- bzw. -regelungsmittel zum Bestimmen einer Betriebszeit der Antriebsmittel (17, 64) basierend auf einem Erfassungswert, der von dem Gelenkwinkelsensor (32) erfasst wird, wobei die Gelenkbewegungsunterstützungsvorrichtung (10, 56) **dadurch gekennzeichnet ist, dass**:
(i) ein Unterstützungskraftsteuer- bzw. -regelmittel bereitgestellt ist, um einen Ausgabe bzw. Ausgangspegel der Antriebsmittel (17, 64) einzustellen, um eine auf das Unterstützungskraftübertragungsband (12, 58) wirkende Last auf einen Zielwert der Unterstützungskraft zu bringen, wenn das Unterstützungskraftsteuermittel bestimmt, dass sich der Benutzer in einem Gehzustand innerhalb eines Aktionszeitraums der Unterstützungskraft befindet, und zwar basierend auf dem Erfassungsergebnis in dem Gelenkwinkelsensor (32);
(ii) ein Durchhangverhinderungssteuer- bzw. -regelmittel bereitgestellt ist, um die Antriebsmittel (17, 64) zu betreiben und eine voreingestellte Vorspannkraft auf das Unterstützungskraftübertragungsband (12, 58) auszuüben, um einen Durchhang des Unterstützungskraftübertragungsbandes (12, 58) zu beseitigen, wenn das Durchhangverhinderungssteuermittel feststellt, dass sich der Benutzer in dem Gehzustand außerhalb des Aktionszeitraums der Unterstützungskraft oder in einem Nicht-Gehzustand befindet, und zwar basierend auf dem Erfassungsergebnis in dem Gelenkwinkelsensor (32);
für das Unterstützungskraftsteuermittel ein Betrieb der Antriebsmittel (17, 64) so konfiguriert ist, dass er basierend auf einem von dem Lastsensor (34) erfassten Erfassungswert rückkopplungsgesteuert bzw. -geregelt ist, um die auf das Unterstützungskraftübertragungsband (12, 58) wirkende Last auf den Zielwert der Unterstützungskraft zu bringen,
für das Durchhangverhinderungssteuermittel der Betrieb der Antriebsmittel (17, 64) so konfiguriert ist, dass er basierend auf einem von dem Lastsensor (34) erfassten Erfassungswert rückkopplungsgesteuert bzw. -geregelt ist, um die auf das Unterstützungskraftübertragungsband (12, 58) wirkende Last auf die voreingestellte Vorspannkraft zu bringen, auf die abgezielt werden soll, und
die Steuerung bzw. Regelung durch das Durchhangverhinderungssteuermittel kontinuierlich ab einem Zeitpunkt, an dem die Steuerung bzw. Regelung einer Zuglast durch das Unterstützungskraftsteuermittel beendet ist, bis zu einem Zeitpunkt durchgeführt wird, an dem ein nächstes Unterstützungsstartsignal von dem Unterstützungszeitsteuerungsmittel ausgegeben wird.

2. Gelenkbewegungsunterstützungsvorrichtung (10, 56) nach Anspruch 1, wobei das Unterstützungskraftübertragungsband (12, 58) ein elastisch verformbares elastisches Teil in zumindest einem Abschnitt davon in einer Längsrichtung enthält.

3. Gelenkbewegungsunterstützungsvorrichtung (10, 56) nach Anspruch 1 oder 2, wobei
ein Encoder an den Antriebsmitteln (17, 64) bereitgestellt ist, um einen Traktionsbetrag des Unterstützungskraftübertragungsbandes (12, 58) in der Spannungsrichtung zu erfassen, und
ein Traktionsbetragsteuer- bzw. -regelmittel bereitgestellt ist, um eine Betriebssteuerung bzw. -regelung der Antriebsmittel (17, 64) basierend auf einem von dem Encoder erfassten Erfassungswert durchzuführen, um den Traktionsbetrag des Unterstützungskraftübertragungsbandes (12, 58) auf einen beabsichtigten Wert zu leiten bzw. zu führen.

4. Gelenkbewegungsunterstützungsvorrichtung (10, 56) nach einem der Ansprüche 1-3, wobei der Zielwert der Unterstützungskraft des Unterstützungskraftsteuermittels als eine periodische Wellenform angegeben ist, die einer periodischen Biegebewegung des Gelenks entspricht.

5. Gelenkbewegungsunterstützungsvorrichtung (10, 56) nach einem der Ansprüche 1-4, wobei
der Gelenkwinkelsensor (32) einen Winkel eines Hüftgelenks des Benutzers erfasst,
das zumindest eine Unterstützungskraftübertragungsband (12, 58) ein Paar Unterstützungskraftübertragungsbänder (12, 58) umfasst, die für das linke und das rechte Bein bereitgestellt sind, und
die Unterstützungskraft so konfiguriert ist, dass sie für eine Gehbewegung des Benutzers jeweils auf das linke und das rechte Bein ausgeübt wird.

## Revendications

1. Dispositif d'assistance de mouvement articulaire (10, 56) incluant :
au moins une bande de transmission de force d'assistance flexible (12, 58) ;
une première partie de port (14, 60) prévue à une première extrémité de la bande de transmission de force d'assistance (12, 58) ;
une seconde partie de port (16, 62) prévue à une seconde extrémité de la bande de transmission de force d'assistance (12, 58), la première partie de port (14, 60) et la seconde partie de port (16, 62) étant configurées pour être portées sur un premier site et un second site prenant en sandwich une articulation d'un utilisateur, respectivement ;
un moyen d'entraînement (17, 64) pour exercer une force d'assistance dans une direction de tension sur la bande de transmission de force d'assistance (12, 58) ;
un capteur d'angle articulaire (32) pour détecter un angle de pliage de l'articulation de l'utilisateur ;
un capteur de charge (34) pour détecter la charge agissant sur la bande de transmission de force d'assistance (12, 58) dans la direction de tension ; et
un moyen de commande de moment d'assistance pour déterminer un moment d'opération du moyen d'entraînement (17, 64) en fonction d'une valeur de détection détectée par le capteur d'angle articulaire (32), le dispositif d'assistance de mouvement articulaire (10, 56) étant **caractérisé en ce que** :
(i) un moyen de commande de force d'assistance est prévu pour ajuster un niveau de sortie du moyen d'entraînement (17, 64) afin d'amener une charge agissant sur la bande de transmission de force d'assistance (12, 58) à une valeur cible de la force d'assistance lorsque le moyen de commande de force d'assistance détermine que l'utilisateur est dans un état de marche au sein d'une période d'action de la force d'assistance en fonction du résultat de détection dans le capteur d'angle articulaire (32) ;
(ii) un moyen de commande de prévention de mou est prévu pour opérer le moyen d'entraînement (17, 64) et exercer une force d'inclinaison préréglée sur la bande de transmission de force d'assistance (12, 58) afin d'éliminer un mou de la bande de transmission de force d'assistance (12, 58) lorsque le moyen de commande de prévention de mou détermine que l'utilisateur est dans l'état de marche en dehors de la période d'action de la force d'assistance ou dans un état de non marche en fonction du résultat de détection dans le capteur d'angle articulaire (32) ;
pour le moyen de commande de force d'assistance, une opération du moyen d'entraînement (17, 64) est configurée pour être commandée par rétroaction en fonction d'une valeur de détection détectée par le capteur de charge (34) afin d'amener la charge agissant sur la bande de transmission de force d'assistance (12, 58) à la valeur cible de la force d'assistance,
pour le moyen de commande de prévention de mou, l'opération du moyen d'entraînement (17, 64) est configurée pour être commandée par rétroaction rétroaction en fonction d'une valeur de détection détectée par le capteur de charge (34) afin d'amener la charge agissant sur la bande de transmission de force d'assistance (12, 58) à la force d'inclinaison prédéfinie devant être ciblée, et
une commande par le moyen de commande de prévention de mou est réalisée en continu d'un moment où la commande d'une charge de traction par le moyen de commande de force d'assistance est finie à un moment où un signal de démarrage d'assistance suivant est émis par le moyen de commande de moment d'assistance.

2. Dispositif d'assistance de mouvement articulaire (10, 56) selon la revendication 1, dans lequel la bande de transmission de force d'assistance (12, 58) inclut une partie élastique élastiquement déformable dans au moins une portion de celle-ci dans une direction longitudinale.

3. Dispositif d'assistance de mouvement articulaire (10, 56) selon la revendication 1 ou 2, dans lequel
un encodeur est prévu sur le moyen d'entraînement (17, 64) pour détecter une quantité de traction de la bande de transmission de force d'assistance (12, 58) dans la direction de tension, et
un moyen de commande de quantité de traction est prévu pour réaliser la commande d'opération du moyen d'entraînement (17, 64) en fonction d'une valeur de détection détectée par l'encodeur afin de diriger la quantité de traction de la bande de transmission de force d'assistance (12, 58) vers une valeur prévue.

4. Dispositif d'assistance de mouvement articulaire (10, 56) selon l'une quelconque des revendications 1 à 3, dans lequel la valeur cible de la force d'assistance du moyen de commande de force d'assistance est donnée en tant que forme d'onde périodique qui correspond à un mouvement de pliage périodique de l'articulation.

5. Dispositif d'assistance de mouvement articulaire (10, 56) selon l'une quelconque des revendications 1 à 4, dans lequel
le capteur d'angle articulaire (32) détecte un angle d'une articulation de la hanche de l'utilisateur,
l'au moins une bande de transmission de force d'assistance (12, 58) comprend une paire de bandes de transmission de force d'assistance (12, 58) prévues pour les jambes gauche et droite, et
la force d'assistance est configurée pour être exercée sur chacune des jambes gauche et droite pour un mouvement de marche de l'utilisateur.
